# EUROPEAN PATENT APPLICATION

(11) **EP 3 960 790 A1**
(43) Date of publication of application: **02.03.2022**
(21) Application number: 20795231.8
(22) Date of filing: 02.04.2020
(51) Int. Cl.: C08G 59/50, C08L 51/04, C08L 63/00, C08J 5/04

(54) **CURABLE COMPOSITION, CURED PRODUCT, FIBER REINFORCED COMPOSITE MATERIAL, AND MOLDED ARTICLE AND METHOD FOR PRODUCING SAME**

(30) Priority: 23.04.2019 JP 2019081871
(71) Applicant: DIC Corporation, Tokyo 174-8520 (JP)
(72) Inventor: KIMURA Makoto, Ichihara-shi, Chiba 290-8585 (JP); MATSUI Shigeki, Ichihara-shi, Chiba 290-8585 (JP); KAWASAKI Akito, Ichihara-shi, Chiba 290-8585 (JP)
(74) Representative: TBK
(86) International application number: PCT/JP2020/015165
(87) International publication number: WO 2020/217918

(57) **Abstract**

The present invention provides: a curable composition including an epoxy resin (A), an amine compound (B), and core-shell particles (C), in which the amine compound (B) contains an N-(aminoalkyl)piperazine compound (B1) as an essential component; a cured product thereof; a fiber reinforced composite material, a fiber reinforced resin molded article, and a method for prdoucing a fiber reinforced resin molded article. The curable resin composition has fast curability, also has favorable impregnation property into reinforced fibers, and furthermore, can form a cured product having excellent toughness and the like.

## Description

### Technical Field

The present invention relates to a curable composition which is fast-curing and has excellent toughness or the like in a cured product, a cured product thereof, a fiber reinforced composite material, a fiber reinforced resin molded article, and a method for producing a fiber reinforced resin molded article.

### Background Art

Fiber reinforced composite materials using a carbon fiber or an aramid fiber as a reinforced fiber are widely used in general industrial applications such as automobiles and wind turbines, aerospace industry applications, and sports applications due to high specific strength and specific elastic modulus. In recent years, fiber reinforced composite materials have been developed for reducing the weight of metals.

As a matrix resin for the fiber reinforced composite material, a thermosetting resin such as an unsaturated polyester resin, a vinyl ester resin, or an epoxy resin is mainly used. Among these, the cured product obtained from the curable composition containing an epoxy resin is being put to practical use in various applications, as a resin for a fiber reinforced composite material, from the viewpoint of having excellent heat resistance, high strength, high elastic modulus, adhesiveness, and chemical resistance, and also having good moldability.

On the other hand, an epoxy resin for a fiber reinforced composite material has a disadvantage that a cured product tends to be more brittle than other resin-based cured product. In order to develop a resin for a fiber reinforced composite material in a wider range of applications, it is required to develop a resin composition capable of improving the brittleness and giving a cured product having excellent toughness.

As one of means for solving the problems, a method of using a modified epoxy resin obtained by reacting an epoxy resin with a compound containing a rubber component in advance or a method of adding a toughness-imparting component to a composition has been proposed (for example, see PTL 1). However, adding the toughness-imparting component increases the viscosity of a formulation (composition), and as a result, an impregnation property into reinforced fibers may deteriorate in some cases.

### Citation List

### Patent Literature

PTL 1: JP-A-2010-59300

### Summary of Invention

### Technical Problem

Accordingly, a problem to be solved by the present invention is to provide a curable composition which is fast-curing, has excellent toughness or the like in a cured product, and also has favorable impregnation property into reinforced fibers, a cured product thereof, a fiber reinforced composite material, a fiber reinforced resin molded article, and a method for producing a fiber reinforced resin molded article.

### Solution to Problem

As a result of intensive studies to solve the problem, the present inventors have found that the problem could be solved by using an N-(aminoalkyl)piperazine compound as a curing agent of an epoxy resin composition and using the N-(aminoalkyl)piperazine compound in combination with core-shell particles, and have completed the present invention.

That is, the present invention provides a curable composition including: an epoxy resin (A); an amine compound (B); and core-shell particles (C), in which the amine compound (B) contains an N-(aminoalkyl)piperazine compound (B1) as an essential component.

The present invention further provides a cured product of the curable composition, a fiber reinforced composite material using the curable composition, a fiber reinforced resin molded article, and a method for producing a fiber reinforced resin molded article.

### Advantageous Effects of Invention

According to the present invention, it is possible to provide a curable composition which is fast-curing and has excellent toughness or the like in a cured product, a cured product thereof, a fiber reinforced composite material, a fiber reinforced resin molded article, and a method for producing a fiber reinforced resin molded article.

### Description of Embodiments

A curable composition of the present invention includes: an epoxy resin (A); an amine compound (B); and core-shell particles (C), in which the amine compound (B) contains an N-(aminoalkyl)piperazine compound (B1) as an essential component.

The epoxy resin (A) is not particularly limited, and a wide variety of compounds can be used. Further, one type of the epoxy resin (A) may be used alone, or two or more types thereof may be used in combination. Some of specific examples of the epoxy resin (A) include, for example, diglycidyloxybenzene, diglycidyloxynaphthalene, an aliphatic epoxy resin, a biphenol type epoxy resin, a bisphenol type epoxy resin, a novolak type epoxy resin, a triphenol methane type epoxy resin, a tetraphenol ethane type epoxy resin, a phenol or naphthol aralkyl type epoxy resin, a phenylene or naphthylene ether type epoxy resin, a dicyclopentadiene-phenol addition reaction type epoxy resin, a phenolic hydroxyl group-containing compound-alkoxy group-containing aromatic compound cocondensation type epoxy resin, a glycidylamine type epoxy resin, and a naphthalene skeleton-containing epoxy resin other than these.

Examples of the aliphatic epoxy resin include glycidyl etherified products of various aliphatic polyol compounds. Examples of the aliphatic polyol compound include an aliphatic diol compound such as ethylene glycol, propylene glycol, 1,3-propanediol, 2-methylpropanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl 1,5-pentanediol, neopentyl glycol, 1,6-hexanediol, 1,4-bis(hydroxymethyl)cyclohexane, and 2,2,4-trimethyl-1,3-pentanediol; and a trifunctional or higher functional aliphatic polyol compound such as trimethylolethane, trimethylolpropane, glycerin, hexane triol, pentaerythritol, ditrimethylolpropane, and dipentaerythritol. Among these, the glycidyl etherified product of the aliphatic diol compound is preferable because the curable composition having more excellent in mechanical strength in the cured product is obtained.

Examples of the biphenol type epoxy resin include those obtained by polyglycidyl etherification of one or more types of biphenol compounds such as biphenol or tetramethylbiphenol with epihalohydrin. Among these, those having an epoxy equivalent in the range of 150 to 200 g/eq are preferable.

Examples of the bisphenol type epoxy resin include those obtained by polyglycidyl etherification of one or more bisphenol compounds such as bisphenol A, bisphenol F, and bisphenol S with epihalohydrin. Among these, those having an epoxy equivalent in the range of 158 to 200 g/eq are preferable.

Examples of the novolak type epoxy resin include those obtained by polyglycidyl etherification of a novolak resin including one or more types of various phenol compounds such as phenol, dihydroxybenzene, cresol, xylenol, naphthol, dihydroxynaphthalene, bisphenol, and biphenol with epihalohydrin.

Examples of the triphenol methane type epoxy resin include those having a structural portion represented by the following Structural Formula (1) as a repeating structural unit. 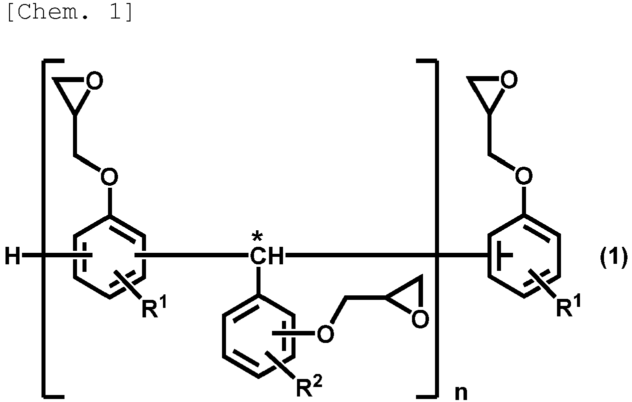 [R¹ and R² in the formula each represent either a hydrogen atom or a bonding site that connects to structural portion represented by Structural Formula (1) via a methine group marked with *. n is an integer greater than or equal to 1.]

Examples of the phenol or naphthol aralkyl type epoxy resin include those in which the glycidyloxybenzene or glycidyloxynaphthalene structure has a molecular structure knotted at a structural portion represented by any of the following Structural Formulas (2-1) to (2-3). 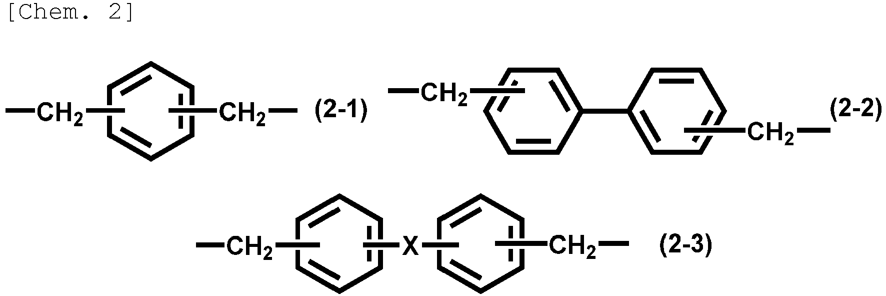 (In the formula, X represents any of an alkylene group having 2 to 6 carbon atoms, an ether bond, a carbonyl group, a carbonyloxy group, a sulfide group, and a sulfone group.]

Examples of the glycidylamine type epoxy resin include, N, N-diglycidylaniline, 4,4'-methylene bis[N, N-diglycidylaniline], triglycidylaminophenol, N,N,N',N'-tetraglycidylxylylenediamine.

Examples of the naphthalene skeleton-containing epoxy resin include bis(hydroxynaphthalene) type epoxy resins represented by any of the following Structural Formulas (3-1) to (3-3).

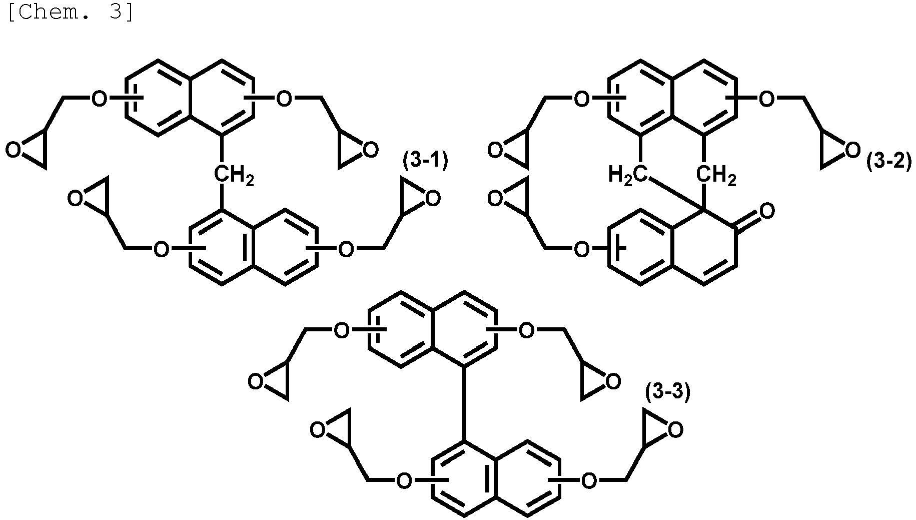

Among the epoxy resins (A), it is preferable to use any of the aliphatic epoxy resin, the bisphenol type epoxy resin, the triphenol methane type epoxy resin, the glycidylamine type epoxy resin, the bis(hydroxynaphthalene) type epoxy resin, represented by any of Structural Formulas (3-1) to (3-3), because a curable composition having an excellent balance between heat resistance and mechanical strength in a cured product is obtained. Among these, the bisphenol type epoxy resin is particularly preferable, and it is preferable to be used in 40% by mass or more with respect to the total mass of the epoxy resin (A). Further, it is preferable to use the bisphenol type epoxy resin and the aliphatic epoxy resin in combination in terms of further excellent heat resistance and mechanical strength in the cured product. In this case, the mass ratio of the bisphenol type epoxy resin to the aliphatic epoxy resin is preferably in the range of 70/30 to 99/1. In addition, in a case where the aliphatic epoxy resin is used, a proportion of the aliphatic epoxy resin with respect to the total mass of the epoxy resin (A) is preferably in the range of 1% to 30% by mass. In a case where the triphenol methane type epoxy resin is used, it is preferable to be used in the range of 5% to 50% by mass with respect to the total mass of the epoxy resin (A). In a case where the glycidylamine type epoxy resin is used, it is preferable to be used in the range of 5% to 50% by mass with respect to the total mass of the epoxy resin (A). In a case where the bis(hydroxynaphthalene) type epoxy resin is used, it is preferable to be used in the range of 1% to 30% by mass with respect to the total mass of the epoxy resin (A).

Further, particularly when used as a fiber reinforced composite material described later, it is preferable that the epoxy equivalent of the epoxy resin (A) is in the range of 165 to 190 g/eq, and the viscosity at 25°C is in the range of 2,000 to 11,000 mPa·s, from the viewpoints of curability, fluidity of a composition, and impregnation property into the reinforced fiber.

The amine compound (B) is used as a curing agent or a curing accelerator for the epoxy resin (A). In the present invention, the N-(aminoalkyl)piperazine compound (B1) is an essential component as the amine compound (B).

Examples of the N-(aminoalkyl)piperazine compound (B1) include compounds represented by the following Structural Formula (4). 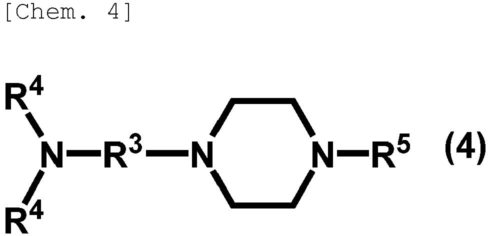 [In the formula, R³ is an alkylene group and R⁴ is a hydrogen atom or an alkyl group. R⁵ is a hydrogen atom or an aminoalkyl group represented by -R³-NR⁴₂.]

The alkylene group represented by R³ in Structural Formula (4) may be a linear type or have a branched structure. Further, the number of carbon atoms thereof is not particularly limited. Among these, R³ is preferably an alkylene group having 1 to 6 carbon atoms because a curable composition having excellent fast curability in addition to heat resistance and mechanical strength in a cured product is obtained. Further, it is more preferably a linear alkylene group having 1 to 6 carbon atoms.

R⁴ in Structural Formula (4) is a hydrogen atom or an alkyl group. The alkyl group may be linear or have a branched structure. Further, the number of carbon atoms thereof is not particularly limited. Among these, R⁴ is preferably a hydrogen atom or an alkyl group having 1 to 4 carbon atoms and more preferably a hydrogen atom, because a curable composition having excellent fast curability in addition to heat resistance and mechanical strength in a cured product is obtained.

R⁵ in Structural Formula (4) is a hydrogen atom or an aminoalkyl group represented by -R³-NR⁴₂. Among these, R⁵ is more preferably a hydrogen atom because a curable composition having excellent fast curability in addition to heat resistance and mechanical strength in a cured product is obtained.

In the present invention, other amine compounds in addition to the N-(aminoalkyl)piperazine compound (B1) may be used in combination, as the amine compound (B). In the present invention, the proportion of the N-(aminoalkyl)piperazine compound (B1) with respect to the total mass of the amine compound (B) is preferably in the range of 20% to 80% by mass, because an excellent effect is sufficiently exhibited on the heat resistance and the mechanical strength in a cured product.

Examples of other amine compounds include aliphatic amine compounds (B2) such as ethylenediamine, N,N,N',N'-tetramethylethylenediamine, propylenediamine, N,N,N',N'-tetramethylpropylenediamine, dimethylaminopropylamine, diethylaminopropylamine, dibutylaminopropylamine, diethylenetriamine, N,N,N',N'',N''-pentamethyldiethylenetriamine, triethylenetetramine, tetraethylenepentamine, 3,3'-diaminodipropylamine, butanediamine, pentandiamine, hexanediamine, trimethylhexanediamine, N,N,N',N'-tetramethylhexanediamine, bis(2-dimethylaminoethyl)ether, dimethylaminoethoxyethoxyethanol, triethanolamine, dimethylaminohexanol, and 3,9-bis(3-aminopropyl)-2,4,8,10-tetraoxyspiro(5,5)undecane adduct;
amine compounds (B3) having a polyoxyalkylene structure in the molecular structure, such as polyoxyethylenediamine and polyoxypropylenediamine;
alicyclic amine compounds (B4) such as cyclohexylamine, dimethylaminocyclohexane, mensendiamine, isophoronediamine, norbornenediamine, bis(aminomethyl)cyclohexane, diaminodicyclohexylmethane, and methylene bis(methylcyclohexaneamine) ;
heterocyclic amine compound (B5) such as pyrrolidine, piperidine, piperazine, N,N'-dimethylpiperazine, morpholin, methylmorpholin, ethylmorpholin, quinuclidine(1-azabicyclo[2.2.2]octane), triethylenediamine(1,4-diazabicyclo[2.2.2]octane), pyrol, pyrazole, pyridine, hexahydro-1,3,5-tris(3-dimethylaminopropyl)-1,3,5-triazine, and 1,8-diazabicyclo-[5.4.0]-7-undecene;
aromatic ring-containing amine compounds (B6) such as phenylene diamine, diaminodiphenylmethane, diaminodiphenylsulfone, N-methylbenzylamine, N,N-dimethylbenzylamine, diethyltoluenediamine, xylylenediamine, α-methylbenzylmethylamine, and 2,4,6-tris(dimethylaminomethyl)phenol;
imidazole compounds (B7) such as imidazole, 1-methylimidazole, 2-methylimidazole, 3-methylimidazole, 4-methylimidazole, 5-methylimidazole, 1-ethyl imidazole, 2-ethyl imidazole, 3-ethyl imidazole, 4-ethyl imidazole, 5-ethyl imidazole, 1-n-propyl imidazole, 2-n-propyl imidazole, 1-isopropyl imidazole, 2-isopropyl imidazole, 1-n-butyl imidazole, 2-n-butyl imidazole, 1-isobutyl imidazole, 2-isobutyl imidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenylimidazole isocyanuric acid adduct, 2-methylimidazole isocyanuric acid adduct, 2-phenyl-4,5-dihydroxymethylimidazole, 2-phenyl-4-methyl-5-hydroxymethylimidazole, 1-cyanoethyl-2-phenyl-4,5-di(2-cyanoethoxy) methylimidazole, 1-dodecyl-2-methyl-3-benzylimidazolium chloride, and 1-benzyl-2-phenylimidazole hydrochloride; and
imidazoline compounds (B8) such as 2-methylimidazoline and 2-phenylimidazoline.

Among these other amine compounds, it is preferable to use the aliphatic amine compound (B2), and more preferable to use the triethylenetetramine. In a case of using the aliphatic amine compound (B2), the mass ratio [(B1)/(B2)] to the N-(aminoalkyl)piperazine compound (B1) is preferably in the range of 20/80 to 80/20.

Further, it is preferable to use the alicyclic amine compound (B4) in terms of further excellent heat resistance and mechanical strength in the cured product. Further, a compound in which the alicyclic structure and the amino group are bonded via an alkylene group, such as norbornene diamine and bis(aminomethyl)cyclohexane, is more preferable, because a curable composition having excellent fast curability in addition to heat resistance and mechanical strength in a cured product is obtained. In a case of using the alicyclic amine compound (B4), the mass ratio [(B1)/(B4)] to the N-(aminoalkyl)piperazine compound (B1) is preferably in the range of 20/80 to 80/20.

In the curable composition of the present invention, a compounding ratio of the epoxy resin (A) and the amine compound (B) is not particularly limited, and can be appropriately adjusted according to the desired performance of a cured product and applications. As an example of compounding, there is a method of compounding in a ratio that the total number of moles of active hydrogen in the amine compound (B) is in the range of 0.5 to 1.05 mol with respect to 1 mol of the epoxy group in the epoxy resin (A).

In a case of using the tertiary amine, the imidazole compound, or the imidazoline compound as the amine compound (B), it is preferably blended in a proportion of 0.01% to 10% by mass with respect to the total mass of the curable composition.

In the present invention, other curing agents or a curing accelerator (B') may be used in combination with the amine compound (B). As the other curing agents or the curing accelerator (B'), any of various compounds generally used as the curing agent or the curing accelerator of the epoxy resin may be used. Specifically, examples thereof include acid anhydrides such as tetrahydrophthalic anhydride, methyltetrahydrophthalic anhydride, hexahydrophthalic anhydride, methylhexahydrophthalic anhydride, methylendethylenetetrahydrophthalic anhydride, trialkyltetrahydrophthalic anhydride, methyl nagic anhydride, phthalic anhydride, trimellitic anhydride, pyromellitic anhydride, and maleic anhydride;
dicyanodiamide or an amide compound obtained by reacting the amine compound (B) with aliphatic dicarboxylic acids such as succinic acid, glutaric acid, adipic acid, pimelic acid, suberic acid, and azelaic acid, or carboxylic acid compounds such as fatty acids and dimer acids;
aliphatic hydrocarbon groups such as phenol, dihydroxybenzene, trihydroxybenzene, naphthol, dihydroxynaphthalene, trihydroxynaphthalene, anthracenol, dihydroxyanthracene, trihydroxyanthracene, biphenol, bisphenol, and on these aromatic nuclei, a methyl group, an ethyl group, a vinyl group, a propyl group, a butyl group, a pentyl group, a hexyl group, a cyclohexyl group, a heptyl group, an octyl group, and a nonyl group;
alkoxy groups such as a methoxy group, an ethoxy group, a propyloxy group, and a butoxy group;
halogen atoms such as a fluorine atom, a chlorine atom, and a bromine atom;
aryl groups such as a phenyl group, a naphthyl group, an anthryl group, and those in which the aliphatic hydrocarbon group, an alkoxy group, a halogen atom, and the like are substituted on these aromatic nuclei;
a phenolic hydroxyl group-containing compound having one or more substituents such as a phenylmethyl group, a phenylethyl group, a naphthylmethyl group, a naphthylethyl group, and the aliphatic hydrocarbon group on these aromatic nuclei and an aralkyl group substituted with an alkoxy group or a halogen atom;
phenol resins such as novolak type phenol resin, triphenol methane type phenol resin, tetraphenol ethane type phenol resin, phenol or naphthol aralkyl type phenol resin, phenylene or naphthylene ether type phenol resin, dicyclopentadiene-phenol addition reaction type phenol resin, and phenolic hydroxyl group-containing compound-alkoxy group-containing aromatic compound co-condensed phenol resin which include one or more of the phenolic hydroxyl group-containing compounds;
urea compounds such as p-chlorophenyl-N,N-dimethylurea, 3-phenyl-1,1-dimethylurea, 3-(3,4-dichlorophenyl) -N,N-dimethylurea, and N-(3-chloro-4-methylphenyl)-N',N'-dimethylurea; and
phosphorus compounds; organic acid metal salts; Lewis acids; and amine complex salts.

The compounding ratio of the other curing agent or the curing accelerator (B') is appropriately adjusted according to the desired performance of a cured product and applications, but is preferably used in the range of 0.5% to 30% by mass in the curable composition. Among the other curing agents or curing accelerators (B'), the phenolic hydroxyl group-containing compound or the phenol resin is preferable because a curable composition having fast curability or excellent heat resistance or mechanical strength in the cured product is obtained. The phenol resin preferably has a hydroxyl group equivalent in the range of 100 to 300 g/equivalent. The compounding ratio of the phenolic hydroxyl group-containing compound or the phenol resin is appropriately adjusted according to the desired performance of a cured product and applications, but it is preferably used in the range of 0.5% to 30% by mass, and more preferably in the range of 0.5% to 10% in the curable composition.

A compounding ratio of the epoxy resin (A), the amine compound (B), and other curing agents or the curing accelerator (B') is not particularly limited, and can be appropriately adjusted according to the desired performance of a cured product and applications. For example, there is a method of compounding in a ratio that the total number of moles of curable functional groups in the amine compound (B) and the other curing agents or the curing accelerators (B') is in the range of 0.5 to 1.05 mol with respect to 1 mol of the epoxy group in the epoxy resin (A).

The core-shell particles (C) used in the present invention are preferably copolymers configured of a core layer of a first (co)polymer and a shell layer including a second (co)polymer graft-polymerized thereto. The shell layer can cover a part or the whole of the surface of the core portion by graft-polymerizing monomers forming the graft component in the presence of the core component. Further, the core-shell particles (C) may have a two-layer structure or may have a multi-layer structure having three or more layers.

It is preferable that the core portion includes a copolymer containing an elastomer or a rubber-like copolymer as a main component, from the viewpoint of effectively improving the mechanical strength in the cured product, particularly effectively improving fracture toughness. Since the (co)polymer forming the core portion preferably has rubber properties, the glass transition temperature is preferably 0°C or lower, and more preferably -20°C or lower.

Preferred specific examples of the core portion include butadiene rubber, butadiene-styrene rubber, butadiene alkyl acrylate rubber, alkyl acrylate rubber, and organosiloxane rubber.

The number average particle diameter of the core portion is preferably 20 to 600 nm, and more preferably 30 to 400 nm from the viewpoint of effectively improving the toughness. The number average particle diameter of the core portion can be measured using Microtrack UPA150 (manufactured by Nikkiso Co., Ltd.).

The core-shell particles (C) are obtained by forming the shell layer by polymerizing one or more types of vinyl monomers in the presence of the core portion. The core-shell copolymer can be formed by, for example, emulsion polymerization, suspension polymerization, microsuspension polymerization, and the like, and is preferably produced by the emulsion polymerization from the viewpoint of controlling the particle diameter.

The core-shell particles (C) are preferably configured of the core portion of preferably 50% to 97% by mass, more preferably 70% to 90% by mass of a rubber polymer, and a shell layer of a polymer of preferably 3% to 50% by mass, more preferably 10% to 30% by mass of vinyl monomers. The shell layer preferably has at least a part of polymer chains chemically bonded to the core portion, in at least 70% or more, more preferably 90% or more, and further preferably 95% or more.

The core-shell particles (C) preferably have a crosslinked structure at least partially in the core portion, from the viewpoint that the core-shell structure can be easily maintained even after being a cured product. When the crosslinked structure is provided, the amount of solvent-insoluble matter (that is, gel fraction) of the core-shell particles can be measured to include solvent-insoluble matter and to find the degree of crosslinking. The measurement is performed by immersing a sample in an excess amount of methyl ethyl ketone (MEK) at room temperature for 24 hours and then centrifuging at 12,000 rpm for 1 hour to remove solubles together with the solvent, and when measuring the mass of the residual MEK insoluble matter, the ratio of the residual sample mass to the input sample mass is expressed in terms of % by mass. Partially having the crosslinked structure means that the proportion (% by mass) is less than 100%. The solvent-insoluble content is preferably 80% to 100% by mass and more preferably 90% to 100% by mass, from the viewpoint of obtaining an excellent performance balance.

Examples of the vinyl monomer configuring the shell layer include aromatic vinyl monomers such as styrene, α-methylstyrene, p-methylstyrene, and divinylbenzene; vinyl cyanide monomer such as acrylonitrile or methacrylonitrile; alkyl (meth)acrylates such as methyl (meth)acrylate, ethyl (meth)acrylate, butyl (meth)acrylate; glycidyl vinyl monomers such as glycidyl (meth)acrylate and glycidyl vinyl ether; hydroxyalkyl (meth)acrylates such as hydroxyethyl (meth)acrylate and hydroxybutyl (meth)acrylate; alicyclic epoxy group-containing vinyl derivatives such as 4-vinylcyclohexene 1,2-epoxide and epoxycyclohexenyl (meth)acrylate; oxetane group-containing vinyl derivatives such as 2-oxetanylpropyl (meth)acrylate; and divinyl monomers such as ethylene glycol di(meth)acrylic acid and 1,3 butylene glycol di(meth)acrylic acid. The vinyl monomer may be used alone or two or more thereof may be used in combination.

It is preferable that the shell layer contains at least one or more reactive functional group selected from an epoxy group, a carboxyl group, a hydroxyl group, and an amino group, from the viewpoint of reactivity with the core portion.

It is preferable that the core-shell particles (C) are favorably dispersed with respect to a matrix phase containing the epoxy resin (A) as a main component in a curable resin composition of the present invention, for example, the primary particles of the core-shell particles (C) having an average of 10 or less particles per dispersed phase are dispersed in an aggregated and loosely aggregated state from the viewpoint of excellent fracture toughness in the cured product.

In the curable resin composition of the present invention, it is preferable that primary particles of the core-shell particles (C) are dispersed independently with respect to the matrix phase containing the epoxy resin (A) as a main component, from the viewpoint of showing further excellent fracture toughness and the like in the cured product. Therefore, it is preferable to disperse the core-shell particles (C) in the primary particle state in the epoxy resin (A) in advance without aggregation before use. In this case, it is more preferable that the primary particles are dispersed with the average particle diameter in the range of 30 to 1000 nm.

The epoxy resin in which the core-shell particles (C) are dispersed can be obtained by using the method described in the related art (for example, US Patent No. 4,778,851). Further, from the viewpoint of easily dispersing the core-shell particles (C) of the present invention in the epoxy resin in the state of primary particles, and from the viewpoint of producing an epoxy resin in which the core-shell particles are dispersed at high speed and at low cost so as to be industrially produced, it is preferable to go through the following steps, for example. That is, there is a preparation method including a first step of obtaining a dispersion of core-shell particles containing a specific organic solvent, a second step of adding an epoxy resin to the dispersion to obtain a core-shell particle-dispersed epoxy resin, and a third step of removing the specific organic solvent from the core-shell particle-dispersed epoxy resin. Such a method is described in, for example, JP-A-2013-241479.

In addition, "Metabrene" (manufactured by Mitsubishi Chemical Corporation), "Staphyroid" (manufactured by Aica Kogyo Co., Ltd.), and "Paraloid" (manufactured by Dow Chemical Corporation) are commercially available as the core-shell particles (C), for example. Examples of the core-shell particle-dispersed epoxy resin include "Kane Ace" (manufactured by Kaneka Corporation) and "Acryset BP Series" (manufactured by Nippon Shokubai Co., Ltd.). It is preferable to use a core-shell particle-dispersed epoxy resin, because not only the preparation time of the composition can be shortened but also the dispersed state of the rubber particles in the composition can be improved.

In the curable composition of the present invention, the content of the core-shell particles (C) is preferably in the range of 0.5% to 10% by mass with respect to the total mass of the epoxy resin (A), the amine compound (B), and the core-shell particles (C), from the viewpoint of the toughness of the obtained cured product, and is more preferably in the range of 2% to 7% by mass, from the viewpoint of more excellent balance between the fluidity and the fast curability of the curable composition, and the performance of the cured product.

The curable composition of the present invention may further contain other components, in addition to the epoxy resin (A), the amine compound (B), the other curing agents or the curing accelerator (B'), and the core-shell particles (C). Examples of other components can include acid-modified polybutadiene, polyether sulfone resin, polycarbonate resin, polyphenylene ether resin, and acrylic resin.

The acid-modified polybutadiene is a component having reactivity with the epoxy resin (A), and when the acid-modified polybutadiene is used in combination, excellent mechanical strength, heat resistance, and moist heat resistance can be exhibited in the obtained cured product.

Examples of the acid-modified polybutadiene include those having a skeleton derived from 1,3-butadiene or 2-methyl-1,3-butadiene in a butadiene skeleton. Examples of the those derived from 1,3-butadiene include those having any structure of 1,2-vinyl type, 1,4-trans type, and 1,4-cis type structures and those having two or more of the structures. Examples of the those derived from 2-methyl-1,3-butadiene include those having any structure of 1,2-vinyl type, 3,4-vinyl type, 1,4-cis type, and 1,4-trans type structures and those having two or more of the structures.

The acid-modifying component of the acid-modified polybutadiene is not particularly limited, and examples thereof can include unsaturated carboxylic acids. As the unsaturated carboxylic acid, acrylic acid, methacrylic acid, maleic acid, maleic anhydride, itaconic acid, and itaconic anhydride are preferable, and the itaconic anhydride and the maleic anhydride are preferable from the viewpoint of reactivity, and the maleic anhydride is further preferable.

The content of the unsaturated carboxylic acid in the acid-modified polybutadiene is set such that, from the viewpoint of reactivity with the epoxy resin (A), in a case where the acid-modified polybutadiene is formed of one derived from 1,3-butadiene, the acid value thereof is preferably 5 mgKOH/g to 400 mgKOH/g, more preferably 20 mgKOH/g to 300 mgKOH/g, and further more preferably 50 mgKOH/g to 200 mgKOH/g. Further, the unsaturated carboxylic acid component may be copolymerized in the acid-modified polybutadiene, and the form thereof is not limited. For example, random copolymerization, block copolymerization, graft copolymerization (graft modification) and the like can be mentioned. The weight average molecular weight (Mw) of the acid-modified polybutadiene is preferably in the range of 1,000 to 100,000.

The acid-modified polybutadiene is obtained by modifying polybutadiene with an unsaturated carboxylic acid, and a commercially available product may be used as it is. Examples of the commercially available products include Evonik Degussa maleic anhydride-modified liquid polybutadiene (polyvest MA75, Polyvest EP MA120 and the like) and Kuraray maleic anhydride-modified polyisoprene (LIR-403, LIR-410).

The content of the acid-modified polybutadiene in the curable composition is preferably in the proportion of 1 part by mass to 40 parts by mass, and further preferably in the proportion of 3 parts by mass to 30 parts by mass when the total mass of the resin components of the curable composition was 100 parts by mass, from the viewpoint of improving the elongation, heat resistance, and moisture heat resistance of the obtained cured product.

The polyether sulfone resin is a thermoplastic resin and is not included in the crosslinking network in the curing reaction of the curable composition, but can exhibit further excellent mechanical strength and heat resistance in the obtained cured product due to the excellent modifier effect with high Tg.

The content of the polyether sulfone resin in the curable composition is preferably in the proportion of 1 part by mass to 30 parts by mass, and further preferably in the proportion of 3 parts by mass to 20 parts by mass when the total mass of the resin components of the curable composition was 100 parts by mass, from the viewpoint of improving mechanical strength and the heat resistance of the obtained cured product.

Examples of the polycarbonate resin include a polycondensate of divalent or bifunctional phenol and carbonyl halide, or a polymer obtained by polymerizing divalent or bifunctional phenol and carbonic acid diester by a transesterification method.

Examples of the divalent or bifunctional phenol include 4,4'-dihydroxybiphenyl, bis(4-hydroxyphenyl) methane, 1,1-bis(4-hydroxyphenyl)ethane, 2,2-bis(4-hydroxyphenyl) propane, 2,2-bis(3-methyl-4-hydroxyphenyl) propane, 2,2-bis(3,5-dimethyl-4-hydroxyphenyl) propane, 1,1-bis(4-hydroxyphenyl) cyclohexane, bis(4-hydroxyphenyl) ether, bis(4-hydroxyphenyl) sulfide, bis(4-hydroxyphenyl) sulfone, bis(4-hydroxyphenyl) sulfoxide, bis(4-hydroxyphenyl) ketone, hydroquinone, resorcin, and catechol. Among these divalent phenols, the bis(hydroxyphenyl) alkanes are preferable, and those using the 2,2-bis(4-hydroxyphenyl) propane as a main raw material are particularly preferable.

On the other hand, carbonyl halides or carbonic acid diesters that react with divalent or bifunctional phenols include, for example, phosgene; diaryl carbonates such as dihaloformate of divalent phenol, diphenyl carbonate, ditril carbonate, bis(chlorophenyl) carbonate, and m-cresyl carbonate; and
aliphatic carbonate compounds such as dimethyl carbonate, diethyl carbonate, diisopropyl carbonate, dibutyl carbonate, diamyl carbonate, and dioctyl carbonate.

Further, in the polycarbonate resin, a molecular structure of polymer chain thereof is a linear structure, and may also be a branched structure. Such a branched structure can be introduced by using, as a raw material component, 1,1,1-tris (4-hydroxyphenyl) ethane, α,α',α"-tris(4-hydroxyphenyl)-1,3,5-triisopropylbenzene, fluoroglucin, trimellitic acid, isatinbis(o-cresol), and the like.

Examples of the polyphenylene ether resin include poly(2,6-dimethyl-1,4-phenylene) ether, poly(2-methyl-6-ethyl-14-phenylene) ether, poly(2,6-diethyl-1,4-phenylene) ether, poly(2-ethyl-6-n-propyl-1,4-phenylene) ether, poly(2,6-di-n-propyl-1,4-phenylene) ether, poly(2-methyl-6-n-butyl-1,4-phenylene) ether, poly(2-ethyl-6-isopropyl-1,4-phenylene) ether, poly(2-methyl-6-hydroxyethyl-1,4-phenylene) ether.

Among these, the poly(2,6-dimethyl-1,4-phenylene) ether is preferable, and a polyphenylene ether containing 2-(dialkylaminomethyl)-6-methylphenylene ether unit, 2-(N-alkyl-N-phenylaminomethyl)-6-methylphenylene ether unit, or the like, as a partial structure may be used.

Regarding the polyphenylene ether resin, a modified polyphenylene ether resin in which a reactive functional group such as a carboxyl group, an epoxy group, an amino group, a mercapto group, a silyl group, a hydroxyl group, or a dicarboxyl anhydride group is introduced into the resin structure by some method such as a graft reaction or copolymerization can also be used as long as the object of the present invention is not impaired.

The acrylic resin can be added for the purpose of improving the mechanical strength of the cured product, particularly the fracture toughness.

A constituent monomer or the polymerization method, and the like of the acrylic resin are appropriately selected depending on the desired performance. Some of specific examples of the constituent monomers include (meth)acrylic acid alkyl esters such as (meth)methyl acrylate, (meth)ethyl acrylate, (meth)butyl acrylate, (meth)acrylate 2-ethylhexyl; (meth)acrylic acid ester having an alicyclic structure such as cyclohexyl (meth)acrylic acid and cyclohexyl methacrylate; (meth)acrylic acid ester having an aromatic ring such as benzyl (meth)acrylate; (meth)acrylic acid (fluoro) alkyl esters such as 2-trifluoroethyl (meth)acrylic acid; acid group-containing monomers such as (meth)acrylic acid, maleic acid (anhydride), and maleic anhydride; hydroxy group-containing monomers such as hydroxyethyl (meth)acrylate, hydroxypropyl (meth)acrylate, and hydroxybutyl (meth)acrylate; epoxy group-containing monomers such as glycidyl (meth)acrylate and 3,4-epoxycyclohexylmethylmethacrylate; aromatic vinyl compounds such as styrene; and diene compounds such as butadiene and isoprene. Among these, the acrylic resin containing (meth)acrylic acid alkyl ester as a main component is preferable because a curable composition having further excellent mechanical strength in the cured product is obtained.

The acrylic resin is preferably a block copolymer in which a plurality of block polymers having different monomer configurations are copolymerized. Examples of the block copolymer include a diblock type of A-B type and a triblock type of A-B-A type and A-B-C type. Among these, it is preferable to include both a block containing methyl (meth)acrylate as a main component and a block containing butyl (meth)acrylate as a main component, because a curable composition having further excellent mechanical strength in the cured product is obtained. More specifically, a triblock type acrylic resin including polymethylmethacrylate block-polybutylacrylate block-polymethylmethacrylate block and a diblock type acrylic resin including polymethylmethacrylate block-polybutylacrylate block are preferable, and the diblock type acrylate resin is particularly preferable. The weight average molecular weight (Mw) of the acrylic resin is preferably in the range of 1,000 to 500,000.

The content of the acrylic resin in the curable composition is not particularly limited, and is appropriately adjusted according to the desired performance of a cured product and the like. Among these, the content is preferably in the range of 0.1 to 20 parts by mass, and more preferably in the range of 0.5 to 10 parts by mass, when the total mass of the resin components of the curable composition is 100 parts by mass, because the curable composition having more excellent mechanical strength in the cured product is obtained.

The curable composition of the present invention can contain a flame retardant/flame retardant aid, a filler, an additive, an organic solvent, and the like within a range that does not impair the effects of the present invention. The compounding order for producing the curable composition is not particularly limited as long as the effect of the present invention can be achieved. That is, all the components may be mixed in advance and used, or may be mixed and used in an appropriate order. Further, regarding the compounding method, for example, kneading production can be adopted using for example, a kneader such as an extruder, a heating roll, a kneader, a roller mixer, or a Banbury mixer. Hereinafter, various members that can be contained in the curable composition of the present invention will be described.

### • Flame Retardant/Flame Retardant Aid

The curable composition of the present invention may contain a non-halogen flame retardant which does not substantially contain a halogen atom in order to exhibit flame retardancy.

Examples of the non-halogen flame retardant include phosphorus-based flame retardants, nitrogen-based flame retardants, silicone-based flame retardants, inorganic flame retardants, and organometallic salt-based flame retardants, and use thereof is also not limited. These may be used alone and a plurality of flame retardants on the same basis may be used, or flame retardants on the different basis may be used in combination.

As the phosphorus-based flame retardant, either an inorganic type or an organic type can be used. Examples of the inorganic compound include ammonium phosphates such as red phosphorus, monoammonium phosphate, diammonium phosphate, triammonium phosphate, and ammonium polyphosphate, and inorganic nitrogen-containing phosphorus compounds such as phosphate amide.

Also, the red phosphorus is preferably surface-treated for the purpose of preventing hydrolysis and the like, and examples of the surface treatment method include (i) a method of coating with an inorganic compound such as magnesium hydroxide, aluminum hydroxide, zinc hydroxide, titanium hydroxide, bismuth oxide, bismuth hydroxide, bismuth nitrate, or a mixture thereof, (ii) a method of coating with an inorganic compounds such as magnesium hydroxide, aluminum hydroxide, zinc hydroxide, and titanium hydroxide, and with a mixture of thermosetting resins such as phenol resin, and (iii) a method of double coating a coating film of an inorganic compound such as a magnesium hydroxide, aluminum hydroxide, zinc hydroxide, and a titanium hydroxide with a thermosetting resin such as phenol resin.

Examples of the organic phosphorus compound include general purpose organic phosphorus compounds such as phosphoric acid ester compounds, phosphonic acid compounds, phosphinic acid compounds, phosphine oxide compounds, phosphoran compounds, and organic nitrogen-containing phosphorus compounds, as well as cyclic organic phosphorus compounds such as 9,10-dihydro-9-oxa-10-phosphaphenanthrene=10-oxide, 10-(2,5-dihydrooxyphenyl)-10H-9-oxa-10-phosphaphenanthrene=10-oxide, and 10-(2,7-dihydrooxynaphthyl)-10H-9-oxa-10-phosphaphenanthrene=10-oxide.

In a case of using the phosphorus-based flame retardant, for example, hydrotalcite, magnesium hydroxide, boring compound, zirconium oxide, black dye, calcium carbonate, zeolite, zinc molybdate, and activated charcoal, may be used in combination with the phosphorus-based flame retardant.

Examples of the nitrogen-based flame retardant include triazine compounds, cyanuric acid compounds, isocyanuric acid compounds, and phenothiazine, and the triazine compounds, the cyanuric acid compounds, and the isocyanuric acid compounds are preferable.

Examples of the triazine compound include melamine, acetoguanamine, benzoguanamine, melon, melam, succinoguanamine, ethylenedimelamine, polyphosphate melamine, and triguanamine, and as well as, aminotriazine sulfate compounds such as guanyl melamine sulfate, melem sulfate, and melam sulfate, the aminotriazine-modified phenol resin, and a product obtained by further modifying the aminotriazine-modified phenol resin with tung oil, isomerized linseed oil, or the like.

Specific examples of the cyanuric acid compound can include cyanuric acid and melamine cyanuric acid.

The compounding amount of the nitrogen-based flame retardant is appropriately selected according to the type of the nitrogen-based flame retardant, other components of the curable composition, and the desired degree of flame retardancy. For example, the nitrogen-based flame retardant is preferably compounded in the range of 0.05 parts by mass to 10 parts by mass, and particularly preferably in the range of 0.1 parts by mass to 5 parts by mass with respect to 100 parts by mass of the total resin components of the curable composition.

When using the nitrogen-based flame retardant, a metal hydroxide, a molybdenum compound, or the like may be used in combination.

The silicone-based flame retardant can be used without particular limitation as long as it is an organic compound containing a silicon atom, and examples thereof include silicone oil, silicone rubber, and silicone resin.

The compounding amount of the silicone-based flame retardant is appropriately selected according to the type of the silicone-based flame retardant, other components of the curable composition, and the desired degree of flame retardancy. For example, the silicone-based flame retardant is preferably compounded in the range of 0.05 parts by mass to 20 parts by mass with respect to 100 parts by mass of the total resin components of the curable composition. Further, when using the silicone-based flame retardant, a molybdenum compound, alumina, or the like may be used in combination.

Examples of the inorganic flame retardant include metal hydroxides, metal oxides, metal carbonate compounds, metal powders, boron compounds, and low melting point glass.

Specific examples of the metal hydroxide can include aluminum hydroxide, magnesium hydroxide, dolomite, hydrotalcite, calcium hydroxide, barium hydroxide, and zirconium hydride.

Specific examples of the metal oxide can include zinc molybdenate, molybdenum trioxide, zinc tinate, tin oxide, aluminum oxide, iron oxide, titanium oxide, manganese oxide, zirconium oxide, zinc oxide, molybdenum oxide, cobalt oxide, bismuth oxide, chromium oxide, nickel oxide, copper oxide, and tungsten oxide.

Specific examples of the metal carbonate compound can include zinc carbonate, magnesium carbonate, calcium carbonate, barium carbonate, basic magnesium carbonate, aluminum carbonate, iron carbonate, cobalt carbonate, and titanium carbonate.

Specific examples of the metal powder can include aluminum, iron, titanium, manganese, zinc, molybdenum, cobalt, bismuth, chromium, nickel, copper, tungsten, and tin.

Specific examples of the boron compound can include zinc borate, zinc metaborate, barium metaborate, boric acid, and borax.

Specific examples of the low melting point glass can include Shipley (Boxy Brown) and glassy compounds such as hydrated glass SiO₂-MgO-H₂O, PbO-B₂O₃-based, ZnO-P₂O₅-MgO-based, P₂O₅-B₂O₃-PbO-MgO-based, P-Sn-O-F-based, PbO-V₂O₅-TeO₂-based, Al₂O₃-H₂O-based, and lead borosilicate-based compounds.

The compounding amount of the inorganic flame retardant is appropriately selected according to the type of the inorganic flame retardant, other components of the curable composition, and the desired degree of flame retardancy. For example, the inorganic flame retardant is preferably compounded in the range of 0.05 parts by mass to 20 parts by mass, and particularly preferably in the range of 0.5 parts by mass to 15 parts by mass with respect to 100 parts by mass of the total resin components of the curable composition.

Examples of the organometallic salt-based flame retardant include ferrocene, an acetylacetonate metal complex, an organometallic carbonyl compound, an organocobalt salt compound, an organosulfonic acid metal salt, and a compound in which a metal atom and an aromatic compound or a heterocyclic compound are ionic-bonded or coordinated-bonded.

The compounding amount of the organometallic salt-based flame retardant is appropriately selected according to the type of the organometallic salt-based flame retardant, other components of the curable composition, and the desired degree of flame retardancy. For example, the organometallic salt-based flame retardant is preferably compounded in the range of 0.005 parts by mass to 10 parts by mass with respect to 100 parts by mass of the total resin components of the curable composition.

### • Filler

The curable composition of the present invention may contain a filler. When the curable composition of the present invention contains the filler, excellent mechanical properties can be exhibited in the obtained cured product.

Examples of the filler include titanium oxide, glass beads, glass flakes, glass fibers, calcium carbonate, barium carbonate, calcium sulfate, barium sulfate, potassium titanate, aluminum borate, magnesium borate, molten silica, crystalline silica, alumina, silicon nitride, and aluminum hydroxide, fibrous reinforcing agents such as kenaf fiber, carbon fiber, alumina fiber, and quartz fiber, or non-fibrous reinforcing agent. These may be used alone or two or more types thereof may be used in combination. Further, these may be coated with an organic substance, an inorganic substance, or the like.

When glass fiber is used as the filler, it can be selected from long fiber type roving, short fiber type chopped strand, milled fiber, and the like and used. As the glass fiber, it is preferable to use a surface-treated material for the resin to be used. When compounding the filler, the strength of the non-combustible layer (or carbonized layer) formed during combustion can be further improved. The non-combustible layer (or carbonized layer) once formed during combustion is less likely to be damaged, and a stable heat insulating capacity can be exhibited, so that a larger flame-retardant effect can be obtained. Furthermore, high rigidity can be imparted to the material.

### • Additive

The curable composition of the present invention may contain an additive. When the curable composition of the present invention contains the additive, other properties such as rigidity and dimensional stability are improved in the obtained cured product. As the additive, for example, plasticizers, antioxidants, ultraviolet absorbers, stabilizers such as light stabilizers, antistatic agents, conductivity-imparting agents, stress relievers, release agents, crystallization accelerators, hydrolysis inhibitors, lubricants, impact-imparting agents, slidability improvers, compatibilizer, nucleating agents, strengthening agents, reinforcing agents, flow conditioners, dyes, sensitizers, coloring pigments, rubber polymers, thickeners, antisettling agent, anti-sagging agent, antifoaming agent, coupling agent, rust preventive, antibacterial/antifungal agent, antifouling agent, conductive polymer, and the like can be added.

### • Organic solvent

The curable composition of the present invention may contain an organic solvent when, for example, a fiber reinforced resin molded article is produced by a filament winding method. Examples of the organic solvent that can be used here include methyl ethyl ketone acetone, dimethyl formamide, methyl isobutyl ketone, methoxypropanol, cyclohexanone, methyl cellosolve, ethyl diglycol acetate, and propylene glycol monomethyl ether acetate, and selecting or appropriate amount to be used can be appropriately selected depending on the applications.

The curable composition of the present invention has a very high curing rate, and exhibits excellent properties of the heat resistance or mechanical strength in the cured product, and can be used for various purposes such as paints, electric/electronic materials, adhesives, and molded articles. The curable composition of the present invention can be suitably used not only for applications in which the curable composition is cured itself and used, but also for fiber reinforced composite materials, fiber reinforced resin molded articles, and the like. These will be described below.

### • Cured product of curable composition

The method for obtaining a cured product from the curable composition of the present invention may be based on a general curing method for epoxy resin compositions. For example, heating temperature conditions may be appropriately selected depending on the types and applications of the curing agent to be combined. For example, a method for heating the curable composition in a temperature range of about room temperature to 250°C can be mentioned. As a molding method or the like, a general method of a curable composition can be used, and in particular, conditions specific to the curable composition of the present invention are not required.

### • Fiber reinforced composite material

The fiber reinforced composite material of the present invention is a material in a state before curing after impregnating the reinforced fibers with the curable composition. Here, the reinforced fiber may be any of twisted yarn, untwisted yarn, twist-less yarn, and the like, and the untwisted yarn or the twist-less yarn is preferable from the viewpoint of having excellent moldability in the fiber reinforced composite material. Further, as a form of the reinforced fiber, one in which the fiber directions are aligned in one direction or a woven fabric can be used. For woven fabrics, plain weaves, satin weaves, and the like can be freely selected according to the part to be used and intended use. Specific examples thereof include carbon fiber, glass fiber, aramid fiber, boron fiber, alumina fiber, and silicon carbide fiber from the viewpoint of excellent mechanical strength and durability, and two or more of these can be used in combination. Among these, carbon fibers are particularly preferable from the viewpoint of improving the strength of the molded article, and various carbon fibers such as polyacrylonitrile-based, pitch-based, and rayon-based can be used.

A method for obtaining the fiber reinforced composite material from the curable composition of the present invention is not particularly limited, and examples thereof include a method in which each component forming the curable composition is uniformly mixed to produce a varnish, and then the unidirectional reinforced fibers in which the reinforced fibers are aligned in one direction is immersed in the varnish obtained above (state before curing by a pultrusion method or the filament winding method), or a method in which reinforced fiber woven fabrics are stacked and set in a concave shape, then sealed in a convex shape, and then resin is injected and pressure impregnated (state before curing by a RTM method).

In the fiber reinforced composite material of the present invention, the curable composition does not necessarily have to be impregnated to the inside of fiber bundle, and an embodiment in which the curable composition is localized near the surface of the fiber may also be adopted.

Further, in the fiber reinforced composite material of the present invention, a volume content of the reinforced fibers with respect to the total volume of the fiber reinforced composite material is preferably 40% to 85%, and is further preferably in the range of 50% to 70% from the viewpoint of strength. In a case where the volume content is less than 40%, the content of the curable composition is too large and the flame retardancy of the obtained cured product may be insufficient, or it may not be possible to meet the properties required for fiber reinforced composite materials with excellent specific elastic modulus and specific strength, in some cases. Further, when the volume content exceeds 85%, the adhesiveness between the reinforced fiber and the resin composition may decrease in some cases.

### • Fiber reinforced resin molded article

The fiber reinforced resin molded article of the present invention is a molded article having a reinforced fiber and a cured product of a curable composition, and is obtained by thermosetting a fiber reinforced composite material. Specifically, as the fiber reinforced resin molded article of the present invention, the volume content of the reinforced fibers in the fiber reinforced molded article is preferably in the range of 40% to 85%, and is particularly preferably 50% to 70% from the viewpoint of strength. Examples of such fiber reinforced resin molded article include automobile parts such as front subframes, rear subframes, front pillars, center pillars, side members, cross members, side sills, roof rails, and propeller shafts, and core members of electric wire cables, pipe materials for submarine oil fields, roll or pipe materials for printing machines, robot fork materials, and primary structural materials and secondary structural materials for aircraft.

The method for obtaining the fiber reinforced molded article from the curable composition of the present invention is not particularly limited, and it is preferable to use a pultrusion molding method (pultrusion method), a filament winding method, an RTM method, or the like. The pultrusion molding method (pultrusion method) is a method of molding a fiber reinforced resin molded article by introducing a fiber reinforced composite material into a mold, heat-curing the material, and then drawing the material out with a drawing device. The filament winding method is a method in which a fiber reinforced composite material (including unidirectional fibers) is wound around an aluminum liner, a plastic liner, or the like while rotating, and then heat-cured to form a fiber reinforced resin molded article. The RTM method is a method of using two types of molds of concave type and convex type, in which the fiber reinforced composite material is heat-cured in the mold to form a fiber reinforced resin molded article. When molding a large product or a fiber reinforced resin molded article having a complicated shape, it is preferable to use the RTM method.

As molding conditions for the fiber reinforced resin molded article, it is preferable to thermoset the fiber reinforced composite material in a temperature range of 50°C to 250°C for molding, and more preferable to mold in a temperature range of 70°C to 220°C. This is because when the molding temperature is too low, sufficient fast curability may not be obtained in some cases, and conversely, when the molding temperature is too high, warpage due to thermal strain may be likely to occur in some cases. Examples of other molding conditions include a method of curing in two steps, such as pre-curing the fiber reinforced composite material at 50°C to 100°C to obtain a tack-free cured product, and then further treating at a temperature condition of 120°C to 200°C.

Other methods for obtaining the fiber reinforced molded article from the curable composition of the present invention include a hand lay-up method or a spray-up method, in which fiber aggregates are laid on the mold and varnish and fiber aggregates are laminated in multiple layers, a vacuum bag method in which either male or female mold is used, a base material made of reinforced fibers is stacked and molded while impregnating the base material with varnish, the molded article is covered with a flexible mold that can apply pressure, and airtightly sealed and then vacuumed (or decompressed) and molded, and a SMC press method in which a sheet of varnish containing reinforced fibers is pressed and molded with a mold.

### Examples

Next, the present invention will be specifically described with reference to Examples and Comparative Examples. In the following, "parts" and "%" are on the mass basis unless otherwise specified.

### Examples 1 to 16 and Comparative Examples 1 to 4

Each component was compounded according to the compounding shown in Tables 1 to 3 below, and a mixture was uniformly stirred and mixed to obtain a curable composition. Various evaluation tests were carried out on the curable composition as follows. The results are shown in Tables 1-3.

The components used in Examples and Comparative Examples are as follows.

### <Epoxy resin (A)>

840S: "EPICLON 840S" manufactured by DIC Corporation Bisphenol A type epoxy resin, epoxy group equivalent 184 g/equivalent
830S: "EPICLON 830S" manufactured by DIC Corporation Bisphenol F type epoxy resin, epoxy group equivalent 168 g/equivalent

### S720: SYNASYA "S-720"

4,4'-methylene bis[N,N-diglycidylaniline], epoxy group equivalent 118 g/equivalent
EX212L: "Denacol EX212L" manufactured by Nagase ChemteX Corporation
1,6-Hexanediol type epoxy resin, epoxy group equivalent 135 g/equivalent

### <Amine compound>

N-AEP: N-aminoethylpiperazine
TETA: Triethylenetetramine
1,3-BAC: 1,3-bis(aminomethyl) cyclohexane
NBDA: Norbornene diamine
IPDA: Isophorone diamine
DETDA: Diethyl Toluenediamine
<Core-shell particle-dispersed epoxy resin>
MX-153: "Kane Ace MX-153" manufactured by Kaneka Corporation
   Polybutadiene rubber particles 33% dispersed bisphenol A type epoxy resin
MX-257: "Kane Ace MX-257" manufactured by Kaneka Corporation
   Polybutadiene rubber particles 37% dispersed bisphenol A type epoxy resin
MX-136: "Kane Ace MX-136" manufactured by Kaneka Corporation
   Polybutadiene rubber particles 25% dispersed bisphenol F type epoxy resin

### <Other resins>

PVF: "VINYLEC K" polyvinyl formal resin manufactured by JNC Corporation

### <Measurement of viscosity>

Using an E-type viscometer "TV-20" (manufactured by Toki Sangyo Co., Ltd.), the viscosity at 25°C was measured in a mixture state other than the amine compound.

### <Measurement of glass transition temperature>

The curable composition obtained above was poured into a mold having a thickness of 2 mm and heated at 120°C for 5 minutes. The obtained cured product was cut into a width of 5 mm and a length of 50 mm with a diamond cutter, and was used as a test piece. Next, the dynamic viscoelasticity of the test piece due to double-sided bending was measured using a viscoelasticity measuring device ("DMS6100" manufactured by SII Nanotechnology Co., Ltd.), and the temperature at which tan δ is maximized is determined as the glass transition temperature (Tg), and evaluated. Measurement conditions for the dynamic viscoelasticity measurement were temperature conditions of room temperature to 260°C, heating rate of 3°C/min, frequency of 1 Hz, and a strain amplitude of 10 µm.

### <Measurement of fracture toughness>

Using the cured product obtained above, the K_{IC} value was measured according to ASTM D 5045-99.

### <Measurement of tensile strength and elongation>

Using the cured product obtained above, the tensile strength was measured in accordance with JIS K 7161 using a precision universal testing machine ("AUTOGRAPH AG-1" manufactured by Shimadzu Corporation).

### <Measurement of gel time>

Immediately after mixing each component at a ratio shown in Table 2, 0.15 g of the curable composition was placed on a hot plate heated to 100°C, and the time (seconds) until the mixture became a gel was measured while stirring with a spatula. The same operation was repeated three times, and an average value was used for evaluation.
A: 300 seconds or shorter
B: 300 to 600 seconds
C: 600 seconds or longer

**[Table 1]**

| Table 1 | Example 1 | Example 2 | Example 3 | Example 4 | Example 5 | Example 6 | Example 7 |
|---|---|---|---|---|---|---|---|
| 840S | 90.9 | 90.9 | 90.9 | 90.9 | 90.9 | 90.9 | 84.8 |
| 830S | | | | | | | |
| S-270 | | | | | | | |
| EX212L | | | | | | | |
| N-AEP | 18.9 | 12.9 | 8.2 | 4.4 | 12.5 | 3.9 | 8 |
| TETA | 2.1 | 5.5 | 8.2 | 10.3 | | | 8 |
| 1,3-BAC | | | | | 8.3 | 15.5 | |
| NBDA | | | | | | | |
| IPDA | | | | | | | |
| DETDA | | | | | | | |
| MX-153 | 9.1 | 9.1 | 9.1 | 9.1 | 9.1 | 9.1 | 15.2 |
| MX-257 | | | | | | | |
| MX-136 | | | | | | | |
| VINYLEC K | | | | | | | |
| Viscosity/mPa·s | 13,000 | 13,000 | 13,000 | 13,000 | 13,000 | 13,000 | 15,300 |
| Tg/°C | 128 | 125 | 120 | 115 | 130 | 134 | 118 |
| Fracture toughness (KIC) | 2.3 | 2.1 | 2 | 1.7 | 2.1 | 1.7 | 2.1 |
| Tensile strength/MPa | 2200 | 2300 | 2500 | 2700 | 2400 | 2700 | 2500 |
| Elongation/% | 9.7 | 8.4 | 7 | 6.6 | 7.5 | 7 | 7 |
| Gel time | A | A | A | A | A | A | A |

**[Table 2]**

| Table 2 | Example 8 | Example 9 | Example 10 | Example 11 | Example 12 | Example 13 | Example 14 |
|---|---|---|---|---|---|---|---|
| 840S | 69.8 | 91.9 | 91.9 | 91.9 | 88 | 88 | |
| 830S | | | | | | | 88 |
| S-270 | | | | | | | |
| EX212L | | | | | | | |
| N-AEP | 7.6 | 8.2 | 10.7 | 11.3 | 8.2 | 11.6 | 8.9 |
| TETA | 7.6 | 8.2 | | | 8.2 | | 8.9 |
| 1,3-BAC | | | | | | | |
| NBDA | | | 10.7 | | | | |
| IPDA | | | | 11.3 | | | |
| DETDA | | | | | | 11.6 | |
| MX-153 | 30.3 | | | | | | |
| MX-257 | | 8.1 | 8.1 | 8.1 | | | |
| MX-136 | | | | | 12 | 12 | 12 |
| VINYLEC K | | | | | | | |
| Viscosity/mPa·s | 19,100 | 13,400 | 13,400 | 13,400 | 11,100 | 11,100 | 11,100 |
| Tg/°C | 115 | 119 | 125 | 123 | 117 | 118 | 115 |
| Fracture toughness (KIC) | 2.2 | 1.9 | 1.9 | 2 | 2.1 | 2.2 | 2.2 |
| Tensile strength/MPa | 2300 | 2400 | 2600 | 2600 | 2600 | 2500 | 2900 |
| Elongation/% | 6.5 | 7.3 | 5.6 | 6.8 | 7.1 | 5 | 8.3 |
| Gel time | A | A | A | A | A | B | A |

**[Table 3]**

| Table 3 | Example 15 | Example 16 | Comparative Example 1 | Comparative Example 2 | Comparative Example 3 | Comparative Example 4 |
|---|---|---|---|---|---|---|
| 840S | 83 | 83 | 90.9 | 100 | 97 | 90.9 |
| 830S | | | | | | |
| S-270 | 5 | | | | | |
| EX212L | | 5 | | | | |
| N-AEP | 8.5 | 8.4 | | 8.4 | 8.2 | |
| TETA | 8.5 | 8.4 | 12.8 | 8.4 | 8.2 | |
| 1,3-BAC | | | | | | |
| NBDA | | | | | | |
| IPDA | | | | | | |
| DETDA | | | | | | 23.4 |
| MX-153 | | | 9.1 | | | 9.1 |
| MX-257 | | | | | | |
| MX-136 | 12 | 12 | | | | |
| VINYLEC K | | | | | 3 | |
| Viscosity/mPa·s | 11,000 | 11,00 | 13,000 | 10,000 | 48,000 | 13,000 |
| Tg/°C | 124 | 113 | 109 | 120 | 119 | Non-Cured |
| Fracture toughness (KIC) | 1.9 | 2 | 0.8 | 0.6 | 0.7 | |
| Tensile strength/MPa | 2600 | 2300 | 2900 | 2500 | 2400 | |
| Elongation/% | 5.9 | 6 | 3.8 | 6.4 | 6.5 | |
| Gel time | A | A | A | A | A | |

## Claims

1. A curable composition comprising:
an epoxy resin (A);
an amine compound (B); and
core-shell particles (C),
wherein the amine compound (B) contains an N-(aminoalkyl)piperazine compound (B1) as an essential component.

2. The curable composition according to claim 1,
wherein the epoxy resin (A) contains a bisphenol type epoxy resin (A1) as an essential component.

3. The curable composition according to claim 1 or 2, wherein the epoxy resin (A) has an epoxy equivalent in a range of 165 to 190 g/eq and the viscosity at 25°C in a range of 2,000 to 11,000 mPa·s.

4. The curable composition according to any one of claims 1 to 3,
wherein a proportion of the N-(aminoalkyl)piperazine compound (B1) with respect to the total mass of the amine compound (B) is in a range of 20% to 80% by mass.

5. The curable composition according to any one of claims 1 to 4,
wherein the core-shell particles (C) are copolymerization each configured of a core portion including a copolymer formed of an elastomer or a rubber-like copolymer as a main component, and a shell layer including a second (co)polymer graft-polymerized thereto.

6. The curable composition according to any one of claims 1 to 5,
wherein the core-shell particles (C) are dispersed in the epoxy resin (A) in a state of primary particles having an average particle diameter in a range of 30 to 1,000 nm.

7. The curable composition according to any one of claims 1 to 6,
wherein the content of the core-shell particles (C) is in a range of 0.5% to 10% by mass with respect to the total mass of the epoxy resin (A), the amine compound (B), and the core-shell particles (C).

8. A cured product of the curable composition according to any one of claims 1 to 7.

9. A fiber reinforced composite material comprising, as essential components:
the curable composition according to any one of claims 1 to 7; and
a reinforced fiber.

10. A fiber reinforced resin molded article comprising, as essential components:
the cured product according to claim 8; and
a reinforced fiber.

11. A method for producing a fiber reinforced resin molded article comprising:
thermosetting the fiber reinforced composite material according to claim 9.
